# EUROPEAN PATENT APPLICATION

(11) **EP 1 457 694 A1**
(43) Date of publication of application: **15.09.2004**
(21) Application number: 02802362.0
(22) Date of filing: 15.10.2002
(51) Int. Cl.: F16C 33/58, G01N 29/10

(54) **ROLLING BEARINGS**

(30) Priority: 31.10.2001 JP 2001335473; 10.04.2002 JP 2002108283
(71) Applicant: NSK LTD.,, Shinagawa-ku, Tokyo 141-8560 (JP)
(72) Inventor: KIUCHI, Akihiro c/o NSK Ltd., Fujisawa-shi, Kanagawa 251-8501 (JP); MATSUMOTO, Youichi c/o NSK Ltd., Fujisawa-shi, Kanagawa 251-8501 (JP); OHORI, Manabu c/o NSK Ltd., Fujisawa-shi, Kanagawa 251-8501 (JP)
(74) Representative: Klingseisen, Franz
(86) International application number: PCT/JP2002/010664
(87) International publication number: WO 2003/038295

(57) **Abstract**

An inner ring 1 and an outer ring 2 are assured by a non-destructive inspection that the maximum length of a non-metallic inclusion existing in an area between the raceway surface and a depth twice a depth Zₒ where the maximum shearing stress exerts is 0.5 mm or less,

The ball bearing is a highly reliable rolling bearing capable of preventing a short life product from occurring and having a stably assured long life,

Further, at least one of the inner ring 31 and the outer ring 32 of the self-aligning roller bearing 30 has a contact angle θ of fiber flow with the roller 33 is 15° or less and is assured by the non-destructive inspection that the square root length of a defect such as non-metallic inclusion existing in the volume of a specimen is 0.3 mm or less where entire raceway circumferential surface x maximum sharing stress depth = volume of a specimen.

The roller bearing 30 has an excellent rolling fatigue life even under an environment where a slip is liable to occur between rollers and inner and outer rings, foreign matter does not enter therein, and lubricating condition is excellent.

## Description

### Technical Field

The present invention concerns a highly reliable rolling bearing with no occurrence of short life products and having stably assured long life and, particularly, it relates to a rolling bearing suitable, for example, to hub bearings for automobiles in which presence of short life products may possibly cause loss of human life.

Further, the present invention generally concerns a bearing used under an environment in which foreign matters do not enter, having higher load carrying capacity compared with ball bearings or the like and liable to cause slipping between inner and outer rings as rolling elements and it, particularly, relates to a rolling bearing suitable to bearings required for large load and high rigidity such as bearings for use in wind power generators.

### Background Art

It has been well-known in rolling bearings that non-metallic inclusions existing on the raceway surface and just below the raceway surface of a rolling bearing ring give significant undesired effects on the rolling fatigue life. The trend is remarkable, particularly, under an environment where foreign matters do not enter and lubricating condition is excellent. Accordingly, in bearings required for long life, as described in ASTM STP1327 P252, it has been intended to make the life longer by lowering an oxygen content in the material for the bearing steel thereby lowering the probability of forming large-sized inclusions.

However, in recent years, since correlationship between the oxygen content and the life is not distinct sometimes, a method of quantify a cleanliness having more distinct correlationship with the life has been found, to make the life of the bearing longer.

For example, Japanese Patent Application Unexamined Publication Hei 6-145883, Japanese Patent Application Unexamined Publication Hei 3-56640, Japanese Patent Application Unexamined Publication Hei 5-117804, and Japanese Patent Application Unexamined Publication Hei 6-192790 describe techniques of observing steel materials microscopically and defining the number of hard inclusions such as oxide type inclusions mainly comprising Al₂O₃ or Ti type inclusions existing in a determined area, thereby making the life of the bearings longer. In the methods described above, the representative sample in a steel material lot is inspected and the life for all the bearings manufactured by the steel material of the lot is forecast.

Further, since high cleanliness is required for steel materials (raw materials) of bearings, steel making manufacturers conduct supersonic flaw inspection for the entire circumference and the entire cross section in the stage of products such as round bars after rolling to assure internal defects and then ship the steel materials. The supersonic flaw inspection method includes, for example, a supersonic flaw inspection method for steel pieces described in "Special Steels", edited by Special Steel Club Incorporation (vol. 46, No. 6, page 31).

However, defects detectable by the supersonic flaw inspection in the rolled products were those of large size with several hundreds µm of width and several tens mm of length. This is because flow inspection at high speed was necessary for ensuring the productivity, and because surface roughness is large and crystal grains in the inside were rough since the surface to be inspected for flaws was in a state as rolled, which generated noises and made the flaw inspection at high accuracy impossible. That is, in the current technique, it has been difficult to detect inclusions of a size having about several hundreds µm of width and length in the product inspection by steel making manufacturers.

For the technique of detecting small inclusions by supersonic flaw inspection, a method of conducting the supersonic flaw inspection by a water immersed vertical method at a high frequency wave of 20 MHz or higher by using a focus type probe has been studied and reported recently (for example, in Japanese Patent Application Unexamined Publication Hei 11-271282, Japanese Patent Application Unexamined Publication 2001-141704, etc). According to this method, inclusions of several tens µm can be detected at a high accuracy.

However, in each of the examples, the frequency of supersonic waves is increased in order to detect small inclusions and a representative sample is extracted from objected materials and put to flaw inspection by the water immersed vertical method. Accordingly, since this is not an idea of inspecting products per se, the occurrence of short life products could not be inspected at the level of the products. Further, since the water immersed vertical method is utilized for the flaw inspection method, this results in a problem that the defect inspection is impossible in the region between the surface to a predetermined depth.

On the other hand, referring to a concrete example of using bearings, a hub bearing is lubricated with grease and prevented from intrusion of foreign matters from the outside by sealing. In a case of the bearing used under such an environment, it may be considered that flaking occurs starting from large-sized non-metallic inclusions existing on the raceway surface or just below the raceway surface (inside) by suffering the rolling fatigue.

For the bearing such as the hub bearing used in a place which may result in, when fractured, an accident to possibly loss of human life, it is important that flaking as well as fracture do not occur in none of the bearings. In view of the above, in the bearings described above, cleanliness of steel materials used is improved, and inspection for detecting surface defects that will directly lead to flaking is conducted for the whole number of bearings and only those passing the inspection are selected and shipped. Particularly, for the raceway surface of bearings, the inspection for detecting cracks, flaws, texture flaws (elongated large size inclusions), or the like occurring mainly on the surface was conducted by a method of using magnetic powder flaw inspection or leakage magnetic flux.

Further, in window power generators, for example, roller bearings such as self-aligning roller bearings, tapered roller bearings, and cylindrical roller bearings are usually used. In the roller bearings, since rollers as rolling elements are in linear contact at the outer circumferential surface to the raceway surfaces of inner and outer rings, they have a feature having larger load carrying capacity and higher rigidity compared with ball bearings using balls for the rolling elements. In addition, they also have a feature that the reliability to seizure is higher and the life is longer compared with sliding bearings.

However, while defects or large size inclusions are detectable in a case where they are exposed to the surface of the raceway surface, it was difficult to detect them when they are not exposed to the raceway surface but exist just below the raceway surface (inside), so that inspection was not conducted.

Typical defects not exposed to the surface and leading to flaking include non-metallic inclusions existing in the steel material. Non-metallic inclusions exist in the steel material at a certain probability. Since larger inclusions cause more undesired effects on flaking, it has to be noted, particularly, for reducing large size inclusions. The large size inclusions have been decreased by the improvement of the cleanliness for the steel material, but since the evaluation means thereof is that by the representative samples, this does not assure large size inclusions for the whole number of bearings.

Further, in the total inspection by supersonic flaw inspection at the stage of steel materials as the raw materials, only the inclusions of several tens mm of length could be detected in view of the problems in production or technique. Accordingly, detection and insurance for the whole number of bearings were difficult for the inclusions of the smaller size of about several mm length.

Since the large size inclusions of about several mm length are detected by the inspection by way of the magnetic powder flaw inspection or leakage magnetic flux at ppm order at best, it is expected that they exist just below the surface about at the same extent of probability. However, the probability leading to flaking or the like is considered to be lower, for example, due to the depth where the inclusions exist. However, in the bearing such as a hub bearing used in a place which may lead to loss of human life if fractured, it is desired that there are no bearings having such defects.

Therefore, in the bearing such as a hub bearing used in a place which may lead to loss of human life if fractured, since extremely high reliability is demanded, it was necessary to conduct, for all bearings, inspection for detecting large size inclusions existing just below the raceway surface of the rolling bearing ring, and only those passing the inspection and with no worry of fracture such as flaking are selected and shipped.

On the other hand, Japanese Patent Application Unexamined Publication Hei 11-337530 discloses a method of detecting the large non-metallic inclusions just below the raceway surface of a bearing. According to the method, the large inclusions of a size of about several tens µm to several hundreds µm existing on the entire cross section of the bearing can be detected by defining an incident angle on every range (depth) for flaw detection.

Further, Japanese Patent Application Unexamined Publication No. 2000-130447 describes, for a roller bearing represented by the bearings for iron and steel and the bearings for railway vehicles, that occurrence of short life products can be prevented by defining the size of large inclusions existing in the region between the raceway surface and 2% depth of a mean diameter of a rolling element which is a depth where maximum shape stress exerts.

However, the technique described in this publication is suitable mainly to roller bearings and it is not always suitable to ball bearings. Referring specifically to the reason, (1) since a raceway surface and a rolling element are in point-to-point contact in a ball bearing, the surface pressure increases generally compared with a roller bearing conducting linear contact, (2) since the angle of contact between the metal flaw of a rolling bearing ring and a rolling element is generally increased, the life tends to be shortened compared with a roller bearing in which the angle of contact is nearly parallel, and (3) since an end flow is exposed to the raceway surface in a ball bearing, the effect is inevitable, etc.

Accordingly, for preventing the occurrence of short life products in the ball bearings, the region for conducting the detection of large size inclusions described in Japanese Patent Application Unexamined Publication 2000-130447 is insufficient and it is necessary to make the region for the object of the inspection (the depth from the raceway surface) larger to ensure the cleanliness of the steel to a deeper position.

Further, while load carrying capacity can be increased easily in the rolling bearing described above, the behavior tends to become complicate because of the linear contact compared with a ball bearing conducting the point-to-point contact and it involves a problem, for example, of causing slipping between a roller and an inner ring or an outer ring. In a case where the slipping is caused, it is still left much unclearness for the rolling fatigue life under the environment where foreign matters do not enter and the lubricating conditions are favorable, which constitutes the subject.

Further, for roller bearings used in wind power generators, since the bearings have to be exchanged being detached from the generator in a case where the bearings are fractured to result in enormous damages, longer life is demanded for the bearings with a view point of maintenance for the generator. Accordingly, it has been demanded for such bearings to eliminate the internal defects on the raceway surface that may directly result in flaking.

Particularly, since a double row self-aligning roller bearing has a structure in which a roller as a rolling element is inclined with an angle of contact and, in addition, undergoes the loads both in the radial direction and the axial direction, the roller causes the behavior of rolling being inclined as it is or rolling being flexed as it is, and the roller tends to slip.

Accordingly, it involves a problem that the life is shortened more compared with the bearing used under a working circumstance of less slipping. Further, as the lubricating condition becomes to be worse, the slipping behavior tends to be increased to increase the friction, which causes early flaking for the raceway surface and the heat generation of the bearing. Accordingly, not only the large defects in the inside (large size inclusions) but also the small defects near the surface (large size inclusions) can be the starting points for flaking to cause a problem to further shorten the life.

Further, for the relationship between the fiber flow of the material to the rolling surface of the bearing and the life, it is generally considered that the fiber flow of the material extending in parallel with the axial direction of the bearing is favorable for the life, and it has been contrived in profiling a material in the manufacture of bearings. However, for the relationship between the angle of the fiber flow of the material to the rolling surface of the bearing and the life, while qualitative examples were shown so far, deleterious effects of the length of inclusions on the life have not yet been studied.

In view of the above, the present invention has a subject of solving the problems in the prior art described above and provides a highly reliable rolling bearing with no occurrence of short life products and stably assured longer life.

Further, it is a subject to provide a rolling bearing having the excellent rolling fatigue life even under the environment where slipping tends to occur between the roller and the inner or outer rings, foreign matters do not enter, and the lubricating condition is favorable.

### Disclosure of the Invention

For solving the subject described above, the present invention comprises the following constitution. At first, the rolling bearing according to the present invention comprises an inner ring, an outer ring and a plurality of rolling elements arranged rotationally between the inner ring and the outer ring, wherein at least one of the inner ring and the outer ring are assured by a non-destructive inspection that the maximum length of the non-metallic inclusions existing in the area between the raceway surface and a depth twice a depth at which the maximum sharing stress exerts is 0.5 mm or less.

Then, it is preferred to be assumed that the maximum square root length of the non-metallic inclusions is 0.2 mm or less by the non-destructive inspection.

Since the cleanliness is assured to the deep position below the raceway surface by the non-destructive inspection, the rolling bearing having such constitution as described above causes no occurrence of short life products and is stably assured for long life. Accordingly, this is suitable to a bearing used in the place which may cause loss of human life, if fractured, and required of the extremely high reliability such as a hub bearing. In a case where the area assured of the cleanliness is smaller than the area described above, that is, when the cleanliness is assured only to the position shallower than the depth twice the depth where the maximum sharing stress exerts, it may result in a worry for the occurrence of short life products.

Further, for the size of the non-metallic intrusions, it is necessary that the maximum length is 0.5 mm or less. In a case where non-metallic inclusions in excess of 0.5 mm exists, the life of the rolling bearing may possibly become insufficient.

Further, for the size of the non-metallic inclusions, it is preferred that the maximum length is 0.5 mm or less and the maximum square root length is 0.2 mm or less. Then, the rolling bearing has longer life. In a case where the non-metallic inclusions with a maximum square root length of more than 0.2 mm exist, the life of the rolling bearing may possibly become insufficient.

The term "the square root length" described in the present invention means a square root for the product of the maximum side length and the minimum side length in a case where the non-metallic inclusion has a cubic shape or rectangular parallelepiped shape and means a square root for the product of the maximum diameter and the minimum diameter in a case where the non-metallic inclusion has a spherical, elliptic or granular shape.

On the other hand, when a roller bearing is used under the environment controlled for the lubricating condition, it is considered that flaking occurs by undergoing the rolling fatigue from the large size non-metallic inclusion existing on the raceway surface or just below the raceway surface (inside) as the starting point. Therefore, the cleanliness of the steel material used for bearings has been improved or the inspection has been conducted for the inclusions on the raceway surface of all bearings by magnetic powder flow inspection or leakage magnetic flux. However, in the prior art, since there was no method for detecting the inclusions just below the raceway surface (inside), inspection has not been conducted.

In view of the above, the present inventors disclosed a method for detecting the large size non-metallic inclusions just below the raceway surface of a bearing in Japanese Patent Application Unexamined Publication Hei 11-337530 and proposed a method for detecting the large size inclusions on the raceway surface of the bearing and capable of assuring inner defects. This is a method capable of detecting the large size inclusions of about several tens µm to several hundreds µm existing on the raceway surface of the bearing by the supersonic flaw inspection method.

Further, the present inventors proposed, for example, in Japanese Patent Application Unexamined Publication 2000-130447 and the like, a technique capable of preventing short life products in roller bearings typically represented by bearings for use in iron and steel and bearing for use in railway vehicles by defining large size inclusions existing in the volume which is defined with entire raceway surface multiplied by 2% depth for the mean diameter of a rolling element, that is, a depth undergoing rolling contact stress.

Subsequently, as a result of an earnest study made by the present inventors, the following two points have been found and the present invention has been accomplished. That is, in a case of a roller bearing used under an environment particularly accompanying slipping as described previously, it has been found that the condition for defining the inclusions is severer compared with the invention disclosed in Japanese Patent Application Unexamined Publication No. 2000-130447, and that the defining condition exists in order to obtain a longer life in the working environment accompanying slipping also for the angle of the fiber flow of the material to the rolling surface of the bearing.

That is, the roller bearing according to the present invention is a roller bearing in which plural rollers are arranged in the circumferential direction between an inner ring and an outer ring, wherein the contact angle θ of the fiber flow of the rolling bearing ring of at least one of the inner ring and the outer ring with the roller is 15° or less, and it is assured by the non-destructive inspection that the square root length of the defect existing in the volume of a specimen is 0.3 mm or less where the entire raceway circumferential surface × maximum shearing stress depth = volume of the specimen.

It was proposed in Japanese Patent Application Unexamined Publication No. 2000-130447 that a long life is obtained under a general working environment by defining the length of the internal defects giving an effect on the bearing life as 0.5 mm or less. However, it has been found that a longer life effect can be obtained in a case under the environment accompanying slipping by defining the same more severely as 0.3 mm or less. This is supposed to be attributable to that slipping increases the stress concentration degree around the inclusion. It is also supposed to be attributable to that since the lubricating condition becomes severer, excess stress occurs also to a position shallower than the maximum shearing stress position to increase the frequency leading to flaking.

Further, in the environment accompanying slipping, it has been found that the angle θ of the fiber flow of the material with to the rolling surface of the bearing undergoing less effect so far (contact angle θ between the fiber flow of the bearing ring and the roller) gives effect on the life. A life improving effect was recognized by defining the angle to 15° or less. Further it was confirmed that a further effect was obtained by defining it 10° or less. However, it was also confirmed that the numerical restriction for the angle θ has a relation with the square root length of the internal defects and no life extending effect can be obtained unless the square root length is 0.3 mm or less.

### Brief Explanation of Drawings

Fig. 1 is a fragmentary vertical cross sectional view showing the constitution of a ball bearing as an preferred embodiment of a rolling bearing according to the present invention.
Figs. 2A and 2B are views showing heat treatment conditions for a bearing ring.
Fig. 3 is a schematic view showing an example of a supersonic flaw inspection apparatus usable in the present invention.
Fig. 4 is a view showing the constitution of a life testing equipment.
Fig. 5 is a graph showing the correlationship between the maximum length of inclusions and the bearing life.
Fig. 6 is a graph showing a correlationship between the maximum square root length of inclusions and the bearing life.
Fig. 7 is a fragmentary vertical cross sectional view showing the constitution of a double row self-aligning roller bearing as an embodiment of a roller bearing according to the present invention.
Fig. 8 is an explanatory view explaining the definition of the angle θ for a fiber flow of a material to a rolling surface of a bearing ring.
Fig. 9 is a view showing a state where the axial line of the inner ring and the fiber flow of the material are in parallel.
Fig. 10 is a graph showing the relationship between the square root length of the non-metallic inclusions and the bearing life.
Fig. 11 is a graph showing the relationship between the angle θ of the fiber flow and the bearing life ratio.

### Best Mode for Practicing the Invention

An embodiment of the present invention are to be described specifically with reference to the drawings. This embodiment shows an example of the present invention but the invention is not restricted to this embodiment.

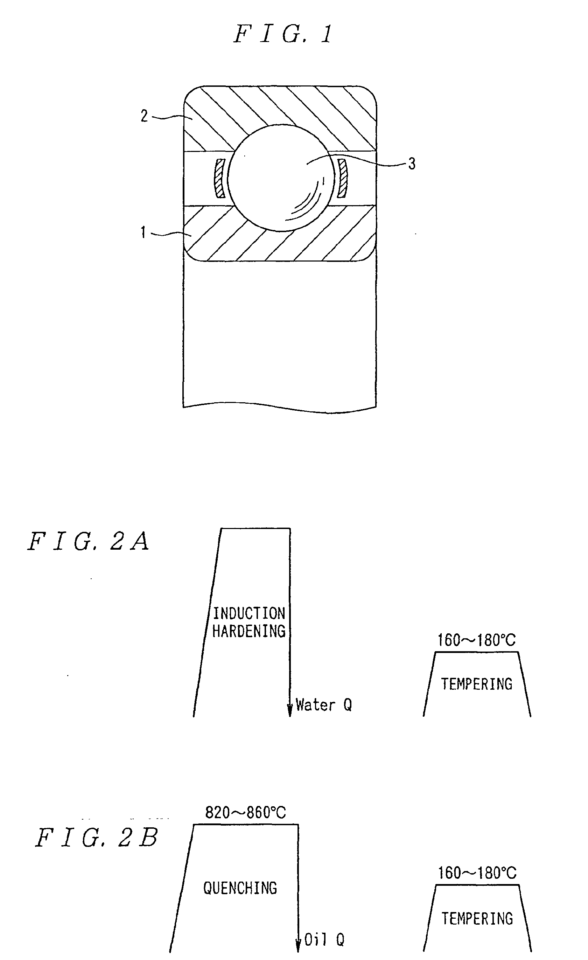

Fig. 1 is a fragmentary vertically cross sectional view showing the constitution of a ball bearing as an embodiment of a rolling bearing according to the present invention. The ball bearing (bearing designation 6206) comprises an inner ring 1, an outer ring 2, and a plurality of balls 3 rotationally disposed between both of the rings 1 and 2, which has a constitution similar, for example, with a hub bearing or the like for use in automobiles.

The inner ring 1 and the outer ring 2 are constituted with a steel material (S53C or SUJ2), which are applied with heat treatment and grinding and then inspected for non-metallic inclusions existing just below the raceway surface by a supersonic flaw inspection method as will be described later.

The heat treatment method for the bearing ring is to be described. In a case where the inner ring 1 and the outer ring 2 are constituted with S53C, as shown in Fig. 2A, induction hardening and atmospheric tempering were applied on the bearing surfaces of the inner ring 1 and outer ring 2, the inner surface of the inner ring 1, the outer surface of the outer ring 2 to conduct hardening treatment for each of the surfaces.

Further, in a case where the inner ring 1 and the outer ring 2 are constituted with SUJ2, the inner ring 1 and the outer ring 2 were applied with bright quenching and atmospheric tempering shown in Fig. 2B.

In each of the cases, the surface hardness of the inner ring 1 and the outer ring 2 was HRC 60.0 to 63.0.

The ball 3 was constituted with SUJ2 and applied with bright quenching and atmospheric tempering shown in Fig. 2B.

Then, the method of inspection for the non-metallic inclusions conducted by the supersonic flaw inspection method is to be described.

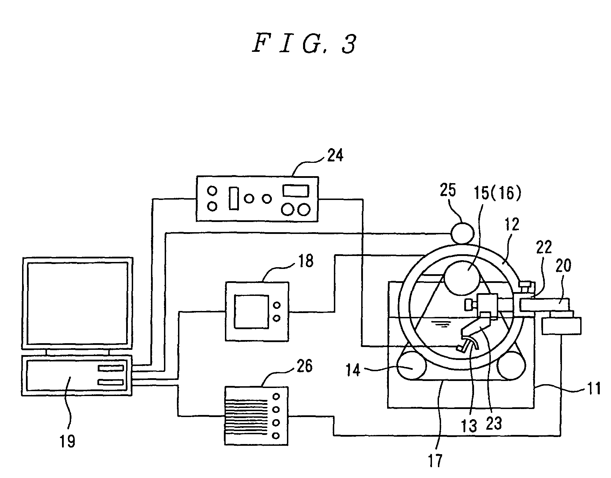

Fig. 3 is a schematic view for a supersonic flaw inspection apparatus. In a water tank 11 storing water as a supersonic wave transmission medium, a bearing ring 12 (outer ring or inner ring) of a tested rolling bearing and a supersonic flaw inspection probe 13 are disposed being immersed in water respectively. As the supersonic flaw inspection probe 13, a focus type probe (transducer diameter 6.5 mm) having an intense directionality and less suffering from the effect of the curvature of the bearing ring 12 is used. However, the similar effects can be obtained also by using a flat type probe having a wide flaw inspection range although the sensitivity is somewhat lowered.

The bearing ring 12 is placed on two pulleys 14 and 14 spaced apart from each other in the horizontal direction in the water tank 11, and a belt 17 is laid in a regular triangular shape around each of the pulleys 14 and 14 and a pulley 16 fixed to a motor shaft of a rotational driving motor 15. The rotational driving motor 15 is controlled by a control device 19 by way of a motor driving control amplifier 18 and the bearing ring 12 placed on each of the pulleys 14 and 14 is adapted to rotate at a predetermined speed by the driving from the rotational driving motor 15. The control device 19 comprises, for example, a personal computer having a display means such as CRT.

The supersonic flaw inspection probe 13 is attached by way of a probe attaching member 23 to an XY stage 22 supported by a linear guide device 20 disposed movably along the axial direction of the bearing ring 12 and disposed being opposed to the raceway surface of the bearing ring 12. Then, the supersonic flaw inspection probe 13 is made movable in the axial direction along the arc of the raceway groove of the bearing 12.

The supersonic flaw inspection probe 13 transmits supersonic pulses (frequency: 10 MHz) in accordance with a voltage signal from a supersonic flaw inspection device 24 to the inner circumferential surface of the bearing ring 12, receives a reflection echo therefrom, converts the same into a voltage signal and transmits the signal to the supersonic flaw inspection device 24.

The supersonic flaw inspection device 24 transmits an instruction signal comprising a voltage signal to the supersonic flaw inspection probe 13 based on the instruction from the control device 19, transmits the flaw inspection information obtained based on the transmitted signal and the received signal to the control device 19, and the control device 19 displays the information on CRT.

The linear guide device 20 is adapted to move the supersonic flaw inspection probe 13 in the axial direction of the bearing ring 12 by way of a not illustrated servo motor controlled by a controller 26 for linear guide. The linear guide controller 26 controls the servo motor based on the instruction from the control device 19 when one rotation (360°) of the bearing ring 12 is detected by a rotary encoder 25 disposed to the outer circumferential surface of the bearing ring 12, to move the supersonic flaw inspection probe 13 by a predetermined distance in the axial direction of the bearing ring 12. Thus, flaw inspection is conducted for the entire raceway surface of the bearing ring 12.

The incident angle of supersonic waves incident to the bearing ring 12 were set to 19° and 27° (refractive angle: 45° and 90°) and the inspection was conducted in a state where flaws could be inspected effectively as far as a depth twice the depth at which the maximum shearing stress exerts (2% depth for the diameter Da of a rolling element).

A ball bearing was assembled by using a bearing ring after the flaw inspection, and a life test was conducted. In this case, those detected with defects were used for the inner ring and those not detected with defects were used for the outer ring (the size of the inclusions are within the defined range of the invention). That is, the life was evaluated under the condition of deciding the bearing life depending on the inclusions existing in the inner ring while using the outer ring having few factors causing a short life. Accordingly, the size and the like of the inclusions described in each of the tables to be shown subsequently are for the inner ring.

For the defects of the inner ring, the size and the existent depth thereof are determined based on the range for the reflection echo (the size of defects) or the beam path and they were selected depending on the size and the depth, and served for the life test.

The size and the depth of the defects were specified by using the following method. At first, bearing rings for which the defects were detected by the supersonic flaw inspection were cut, and the inclusions were found by microscopic observation to confirm the size (length) and the depth (position). Then, the correlationship between the size (length) of the inclusions and the range and the intensity of the reflection echo was determined by comparing the range and the intensity of the reflection echo obtained by the supersonic flaw inspection, and the size (length) and the depth of the inclusions in the bearing ring applied with the supersonic flaw inspection were determined by utilizing the previously obtained correlationship.

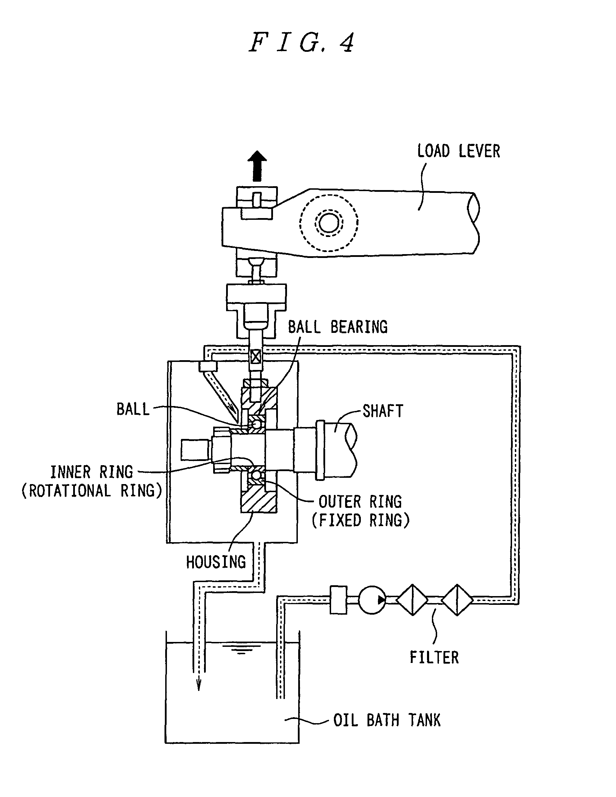

Then, description is to be made to a method of a life test for ball bearings obtained as described above. A ball bearing was mounted to a canti-lever type life testing equipment shown in Fig. 4 and rotated under the following test conditions to conduct the life test. Then, the time till the occurrence of flaking on the raceway surface was evaluated as the life.

| | |
|---|---|
| Radial load | 13830N |
| Number of rotation of rotational shaft | 3900 rpm |
| Lubrication | lubricant VG68 |

Since the calculated life of a rolling bearing according JIS B1518 is 12 hours, the test termination time was set to 100 hours which was about 8 times as long as the calculated life. Further, for the case of causing flaking to the raceway surface in the life test, a mark was indicated to the end face extended in the axial direction from the position for the detect found by the supersonic flaw inspection so that the correlationship between the position for the defect and the position for the flaking can be demonstrated after the life test.

At first, description is to be made to the result of the test for Examples 1 to 4 and Comparative Examples 1 to 6, as shown in Table 1. The bearing rings are constituted with S53C in all of the bearings and a hardened layer is formed on the raceway surface by induction hardening. Then, as described above, the non-metallic inclusions exist just below the raceway surface of the inner ring.

The maximum length of the inclusions existing in the inner rings of Examples 1 to 4 and Comparative Examples 1 to 6 are as shown in Table 1, and the minimum length thereof was in a range from 0.04 to 0.06 mm in each of the cases. Further, the existent position is at the position shallower than the depth twice the depth (Z₀) at which the maximum shearing stress exerts in this life test.

**Table 1**

| | Steel type | Maximum length of non-metallic inclusion (mm) | Life (hr) |
|---|---|---|---|
| Example 1 | S53C | 0.5 | 95 |
| Example 2 | S53C | 0.4 | 100 |
| Example 3 | S53C | 0.3 | 100 |
| Example 4 | S53C | 0.24 | 100 |
| Comp. Example 1 | S53C | 0.55 | 15 |
| Comp. Example 2 | S53C | 0.58 | 14 |
| Comp. Example 3 | S53C | 0.7 | 11 |
| Comp. Example 4 | S53C | 0.85 | 5 |
| Comp. Example 5 | S53C | 1.2 | 3 |
| Comp. Example 6 | S53C | 2.5 | 2.5 |

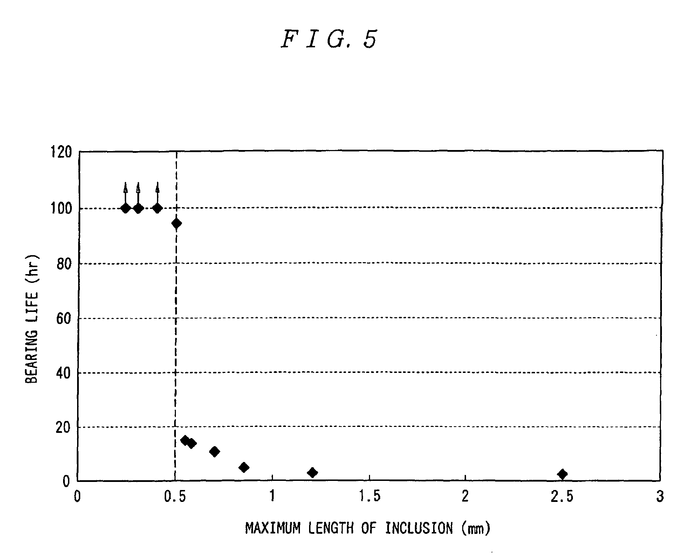

As can be seen from Table 1 and Fig. 5 graphically showing the result thereof, Examples 1 to 4 had extremely long life since the maximum length of the inclusions was 0.5 mm or less. Particularly, since no flaking was caused even after the lapse of 100 hrs which was 8 times as long as the calculated life, in Examples 2 to 4, the life test was terminated. Accordingly, it can be said that the maximum length of the inclusion is preferably 0.4 mm or less.

On the contrary, Comparative Examples 1 to 6 showed short life since the maximum length of the inclusions exceeded 0.5 mm and it was 1/6 or less of Example 1 even for Comparative Example 1 with the longest life.

The flaking position in Example 1 and Comparative Examples 1 to 6 causing flaking by the life test was identical with the position where the defects were found by the supersonic flaw inspection in each of the cases and it was confirmed that the flaking was caused from the inclusions.

Then, description is to be made to the test result for Examples 5 to 8 and Comparative Examples 7 to 10 shown in Table 2. The bearing rings were constituted with S53C in all of the bearings, and the hardened layer was formed on the raceway surface by ratio frequency quenching. Then, as described above, the non-metallic inclusions exist just below the raceway surface of the inner ring.

The existent positions of the inclusions existing in the inner rings of Examples 5 to 8 and Comparative Examples 7 to 10 were at the position shallower than the depth the twice depth (Z₀) for at which the maximum shearing stress exerts during this life test.

**Table 2**

| | Steel type | Size of non-metallic inclusion (mm) | | | Life (hr) |
|---|---|---|---|---|---|
| | | Maximum length | Minimum length | Maximum square root length | |
| Example 5 | S53C | 0.50 | 0.05 | 0.16 | 100 |
| Example 6 | S53C | 0.42 | 0.1 | 0.20 | 80 |
| Example 7 | S53C | 0.30 | 0.08 | 0.15 | 100 |
| Example 8 | S53C | 0.25 | 0.05 | 0.11 | 100 |
| Comp. Example 7 | S53C | 0.45 | 0.2 | 0.30 | 6 |
| Comp. Example 8 | S53C | 0.30 | 0.2 | 0.24 | 10 |
| Comp. Example 9 | S53C | 0.70 | 0.15 | 0.32 | 7 |
| Comp. Example 10 | S53C | 1.50 | 0.05 | 0.27 | 8 |

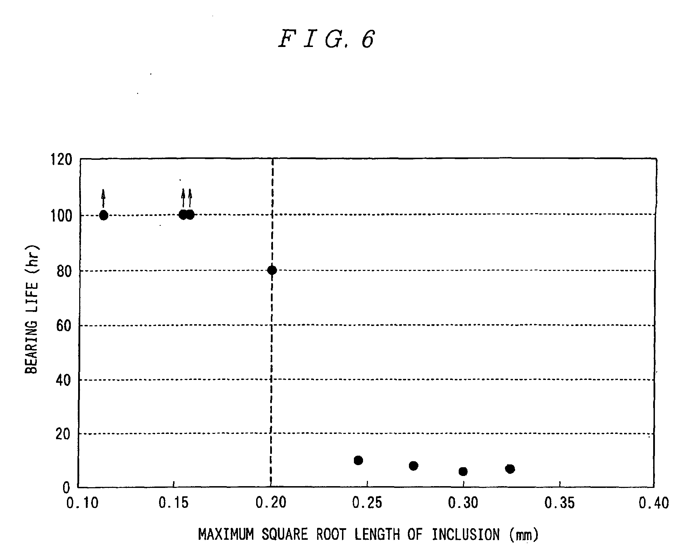

As can be seen from Table 2 and Fig. 6 graphically showing the result thereof, Examples 5 to 8 had extremely long life which was about 7 times or more of the calculated life since the maximum length of the inclusions was 0.5 mm or less and the maximum square root length (square root for the product of the maximum length and the minimum length) was 0.2 mm or less. Particularly, since no flaking was caused even after the lapse of 100 hours in Examples 5, 7, and 8, the life test was terminated. Accordingly, it can be said that the maximum square root length is preferably 0.16 mm or less.

On the contrary, Comparative Examples 7 to 10 showed short life since the maximum square root length exceeded 0.2 mm, and it was 1/8 of Example 6 even for Comparative Example 8 with the longest life.

The flaking positions in Example 6 and Comparative Examples 7 to 10 causing flaking by the life test were identical with the positions where the defects were found by the supersonic flaw inspection in each of the cases and it was confirmed that flaking was caused from the inclusions.

Then, description is to be made to the test result for Examples 9 to 11 and Comparative Examples 11 to 14 shown in Table 3. The bearing rings of theirs were constituted with S53C or SUJ2, and applied with the heat treatment described above, respectively. And, as described above, non-metallic inclusions exist just below the raceway surface of the inner ring.

**Table 3**

| | Steel type | Size of non-metallic inclusion (mm) | | | Existent position for non-metallic inclusions¹⁾ | Life (hr) |
|---|---|---|---|---|---|---|
| | | Maximum length | Minimum length | Maximum square root length | | |
| Example 9 | S53C | 0.50 | 0.05 | 0.16 | 0.7 x Z₀ | 100 |
| Example 10 | S53C | 0.42 | 0.1 | 0.20 | 2 x Z₀ | 100 |
| Example 11 | SUJ2 | 0.30 | 0.08 | 0.15 | 1.2 x Z₀ | 100 |
| Comp. Example 11 | S53C | 0.30 | 0.2 | 0.24 | 2.5 x Z₀ | 100 |
| Comp. Example 12 | SUJ2 | 1.00 | 0.2 | 0.45 | 2.2 x Z₀ | 100 |
| Comp. Example 13 | S53C | 2.00 | 0.08 | 0.40 | 1.8 x Zo | 14 |
| Comp. Example 14 | SUJ2 | 0.40 | 0.3 | 0.35 | 0.8 x Z₀ | 5 |

| | | | | | | |
|---|---|---|---|---|---|---|
| 1) Z₀: depth for which maximum shearing stress is to exert | | | | | | |

As can be seen from Table 3, Examples 9 to 11 had extremely long life since the maximum length of the inclusions was 0.5 mm or less and the maximum square root length (square root for the product of the maximum length and the minimum length) was 0.2 mm or less, and the existent position for the inclusions is at the positions shallower than the twice depth for Z₀, and flaking was not caused even lapse of 100 hours which was 8 times or more of the calculated life.

On the contrary, in Comparative Examples 11 and 12, although the maximum square root length exceeded 0.2 mm, since the existent position for the inclusions is at the positions deeper than the twice depth for Z₀, no flaking was caused even lapse of 100 hours to show long life. In view of the above, it can be said that the region defining the size of the inclusions is preferably in the range from the raceway surface to the twice depth for Z₀.

Further, Comparative Examples 13 to 14 had short life since the maximum square root length exceeded 0.2 mm and the existent positions for the inclusions were at the positions shallower than the twice depth for Z₀.

The flaking positions in Comparative Examples 13 and 14 causing flaking by the life test were identical with the positions where the defects were found by the supersonic flaw inspection in each of the cases and it was confirmed that flaking was caused from the inclusion.

As has been described above, the ball bearings of this embodiment described above, had extremely long life, since it was assured by the non-destructive inspection that the maximum length of the non-metallic inclusions existing in the region between the raceway surface and the depth twice the depth at which the maximum shearing stress is exerted is 0.5 mm or less. Accordingly, they are preferred to the bearings used in a place which may possibly cause loss of human life, when fractured, and thus are required for extremely high reliability as in hub bearings.

In this embodiment, the induction hardened material of S53C and the bath quenched material of SUJ2 used generally for hub bearings were used, other bearing steels as such case hardened steels can also be used with no troubles.

Further, while the embodiment has been described to an example of a deep groove ball bearing, the rolling bearing of the present invention is applicable to various other types of rolling bearings so long as they are rolling bearings used in places which may possibly cause loss of human life, when fractured, and for which high reliability is demanded. For example, they can include radial type roll bearings such as angular ball bearings, self-aligning ball bearings, cylindrical roller bearings, tapered roller bearings, needle roller bearings and self-aligning roller bearings, and thrust type rolling bearings such as thrust ball bearings and thrust roller bearings.

An embodiment of the roller bearing according to the present invention is to be described specifically with reference to the drawings.

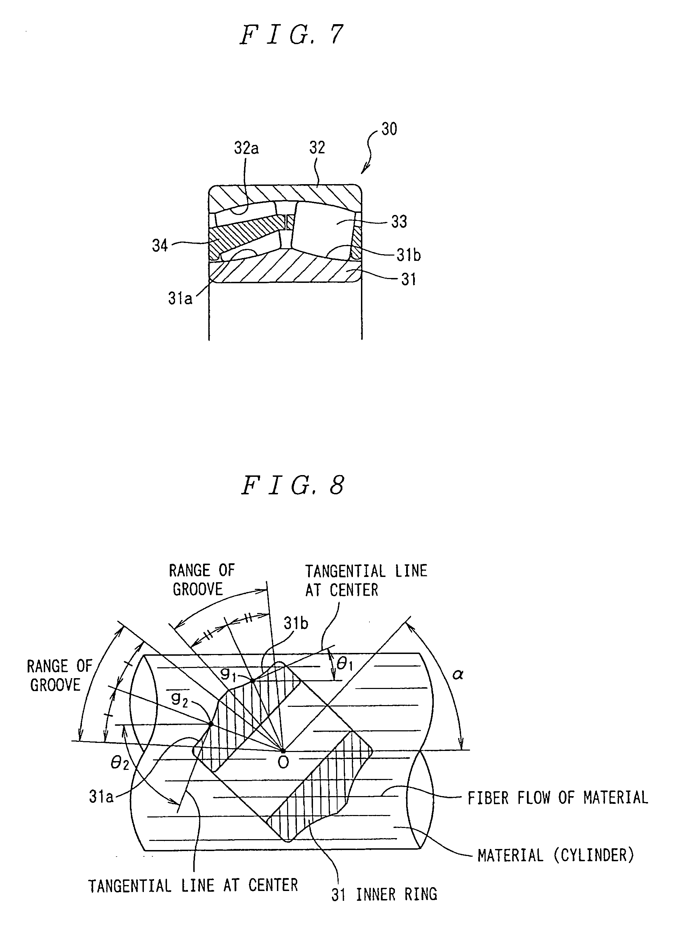

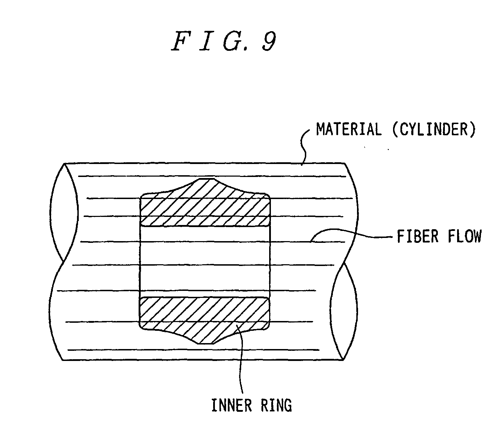

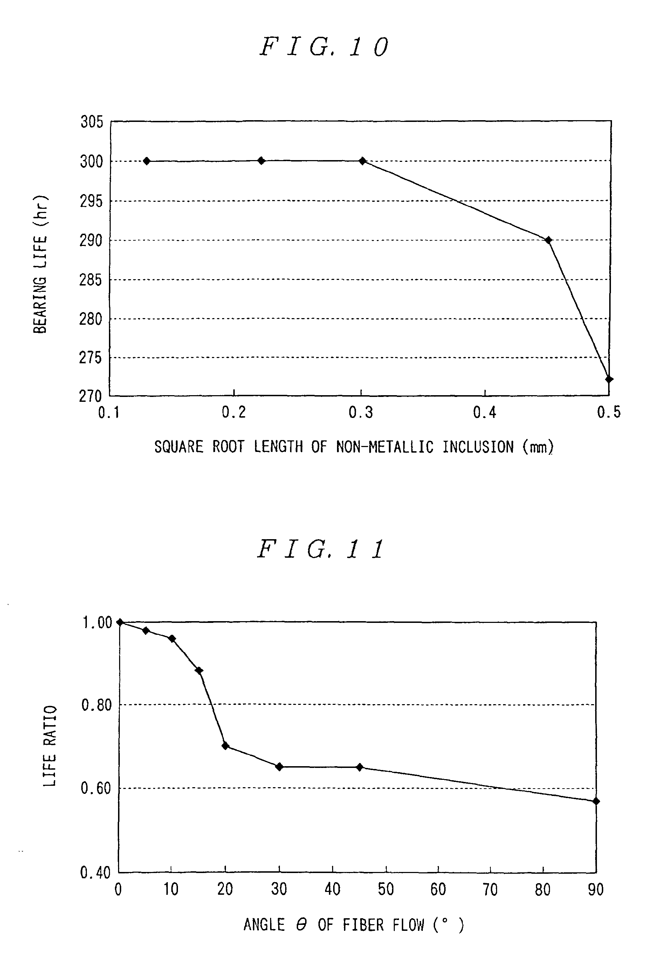

Fig. 7 is a fragmentary vertically cross sectional view showing the constitution of a double row self-aligning roller bearing as an embodiment of roller bearing according to the present invention. Further, Fig. 8 is an explanatory view for explaining the definition of the angle θ of the fiber flow of the material to the rolling surface of the bearing ring (angle θ of the fiber flow of the bearing ring in contact with the roller). Fig. 9 is a view showing the state where the axial line of an inner ring and the fiber flow of the material are in parallel. Further, Fig. 10 is a graph showing the relationship between the square root length of the non-metallic inclusion and the bearing life and Fig. 11 is a graph showing the relationship between the angle θ of the fiber flow and the bearing life ratio. In this embodiment, an example of a double row self-aligning roller bearing (hereinafter referred to as self-aligning roller bearing) is adopted as an example of the roller bearing.

As shown in Fig. 7, in the self-aligning roller bearing 30, the rollers 33 of double rows are intervened rotationally between two rows of raceway grooves 31a and 31b of the inner ring 31, and the raceway surface 32a of the outer ring 32 by way of a cage 34 in the circumferential direction.

Then, in the self-aligning roller bearing 30, the angle θ at which the fiber flow of at least one of the bearing rings of the inner ring 31 and the outer ring 32 in contact with the roller 33 is 15° or less, preferably, 10° or less, and it is assured by a non-destructive inspection such as by a supersonic flow inspection apparatus that the square root length of defects such as the non-metallic inclusions, base texture flaws and open cracks existing in the volume of sample is 0.3 mm or less circumferential where entire the raceway surface × maximum shearing stress depth = volume of sample. This can provide excellent rolling fatigue life even in the environment where slip is liable to occur between the roller 33 and the inner or outer ring 31 or 32, foreign matters do not enter and the lubricating condition is favorable.

The square root length of the defect is defined as a square root (L × D)^{1/2} for the product of length L and width D in a case where the shape of the defect is linear (linear defect) and as a square root (D₁ × D₂)^{1/2} for the product of the maximum diameter (major axis diameter) D₁ and the minimum diameter (minor axis diameter) D₂ in a case where the shape of the defect is granular, spherical or lumpy (non-linear defect).

Further, the angle θ at which the fiber flow of the bearing ring is in contact with the roller 33 has the same meaning as the angle θ of the fiber flow of the material to the rolling surface of the bearing ring. Referring to an example of the inner ring 31 in Fig. 8, the angle θ includes two angles (θ₁, θ₂) for the two double row raceway grooves 31a and 31b, and θ₂ (θ₁) is defined as an angle formed between the tangential line on the surface of the raceway groove at the center g₁, g₂ for the range connecting from the axial center O with the inner end and the outer end in the raceway groove range, and the fiber flow. While a smaller angle θ₁ and a larger angle θ₂ are present, since the life is ruled by the larger angle θ₂, the angle θ₂ is used in a case of the inner ring 31, and in Fig. 11 and Table 5 as described later are also arranged using the angle θ₂.

Further, in the case of the tapered roller bearing and the cylindrical roller bearing, since the raceway surface does not form the inner spherical face as in the self-aligning roller bearing described above, the tangential line at the surface of the raceway groove is the raceway surface itself. Accordingly, in this case, the angle formed between the fiber flow and the roller is defined by the angle formed between the fiber flow and the raceway surface in the cross section including the axial line of the bearing ring.

Since the constitution and the method of using of the supersonic flaw inspection apparatus in Fig. 3 are as described above, description thereof is to be omitted. However, in Example 21 and Example 22 as described later, the apparatus inspects flaw by using an inclined flaw inspection method at an incident angle of 10 to 30° (preferably 25 to 30°) as far as at least 2 mm below the surface deeper than the position for the maximum shearing stress position of the bearing ring (inner ring, outer ring) and, further, inspects flaws by using a vertical flaw inspection method with an incident angle form 0 to 10° (preferably, 0 to 5°) for the range deeper than the flaw inspection range by the inclined flaw inspection method thereby inspecting flaws over the entire cross section of the bearing ring. Further, supersonic waves transmitted from the supersonic flaw inspection probe 13 to the bearing ring 12 is 30 MHz or lower.

### (Example 21)

Using a self-aligning roller bearing (bearing designation 22211), the relationship between the square root length and the depth of the non-metallic inclusions existing in the bearing raceway surface and the bearing life was evaluated. Further for the evaluation of the non-metallic inclusions, inspection was conducted by the supersonic flaw inspection apparatus in Fig. 3.

In the inspection for the correlationship between the non-metallic inclusions and the bearing life, since the occurrence frequency of the non-metallic impurities is low in a case of using usual steels, steel of poor cleanliness (steel species: SUJ2) was intentionally dissolved and used as a material for the test with an aim of effectively selecting the predetermined non-metallic inclusions.

Then, the inner ring of the self-aligning roller bearing was manufactured by using SUJ2 of poor cleanliness as the material. After applying the heat treatment and grinding to the inner ring, presence or absence of the non-metallic inclusions (the square root length and the depth of the non-metallic inclusions) was investigated by supersonic flaw inspection to manufacture No. 1 to No. 9 self-aligning roller bearings shown in Table 4 respectively. The outer ring and the rollers of the self-aligning roller bearing were manufactured by using usual commercial materials of excellent cleanliness (SUJ2) and by the same procedures as for the inner ring. Further, the outer ring and the roller for which no large non-metallic inclusions were detected previously by the supersonic flaw inspection were selected and used.

The raw material for the self-aligning roller bearing (inner ring, outer ring, roller) manufactured in this example was profiled in the direction at an angle such that the direction of the fiber flow of the material is in parallel with the axial direction of the bearing in each case. Fig. 9 shows the positional relationship between the inner ring (external diameter: 65 mm, internal diameter 55 mm, width 25 mm) and the fiber flow.

Conditions for the supersonic flow inspection are as described below.
Probe: Focus type probe and the flat type probe (diameter of transducer: 6.5 mm)
Frequency: 5 MHz to 10 MHz
Incident angle: 19° and 27° (refraction angle: 45°, 90°)

Prior to the selection of the self-aligning roller bearings No. 1 to No. 9 used in this example, several defective bearings were detected by preliminary flaw inspection, and after previously investigating the correlationship between the information for the detection range (magnitude) and the beam path (time axis for supersonic wavelength) of the supersonic reflection echo for the defective portion and the size and the depth of actual defects (non-metallic inclusions) detected by cutting and inspecting the defective portions, they were served to the selection (estimation for size and depth) of the self-aligning roller bearing having non-metallic inclusions of this example.

Then, bearing life test was conducted by using a lubricant controlled so that foreign matters are not entered and using a rotational tester having a structure where lubricant prevails sufficiently in the bearing.

Test conditions are shown below.
Bearing: self-aligning roller bearing (bearing designation 22211)
Test load: radial load 35000N, and axial load 7000N
Bearing rotational frequency: 1500 min⁻¹
Lubricant: mineral oil corresponding to VG68

Since the calculated life of the rolling bearing according to JIS B1518 is 143 hrs, the life test was terminated at 300 hrs which was more than twice of the calculated time. Further, in a case where flaking occurred, marks were indicated at the end face extended axially from the defect positions after the supersonic flaw inspection in order to follow the correlationship between the position of the non-metallic inclusion found by the supersonic wave and the position for flaking and identification was conducted.

Table 4 and Fig. 10 show the result of conducting the life test.

**Table 4**

| No. | Square root length of non-metallic inclusion (mm) | Life (hr) | Non-metallic inclusion depth |
|---|---|---|---|
| 1 | 0.13 | 300 (interrupted) | within Z₀ |
| 2 | 0.22 | 300 (interrupted) | |
| 3 | 0.30 | 300 (interrupted) | |
| 4 | 0.45 | 290 | |
| 5 | 0.50 | 272 | |
| 6 | 0.55 | 140 | |
| 7 | 0.60 | 60 | |
| 8 | 0.75 | 50 | |
| 9 | 0.75 | 300 (interrupted) | Exceeding Z₀ |

As apparent from Table 4 and Fig. 10, the life was somewhat long when the square root length of the non-metallic inclusion was 0.5 mm or less (No. 1 to No. 5) and flaking did not occur even in excess of 300 hrs when the square root length was 0.3 mm or less (No. 1 to No. 3), and the test was interrupted. Accordingly, it can be seen that the life is made further longer by defining the square root length of the non-metallic inclusion preferably to 0.3 mm or less.

On the other hand, in a case where the square root length of non-metallic inclusion exceeded 0.5 mm (No. 6 to No. 8), it resulted in short life such as occurrence of flaking before calculated life. Further, any of them is an example of bearings where the existent depth of non-metallic inclusions is shallower than the maximum shearing stress position (Z₀). In a case where non-metallic inclusions exist at a position deeper than Z₀, flaking did not occur and the life was long unless it exceeded 300 hours even in an example that the square root length of the non-metallic inclusion was 0.75 mm that greatly exceeded 0.5 mm, when the non-metallic inclusions were present at the position deeper than Zo.

From the foregoing result, it has been found that the life of the self-aligning roller bearings which may sometime cause slipping or the like during use can be extended stably by assuring the square root length of the non-metallic inclusions to 0.5 mm or less, preferably, 0.3 mm or less, as a result of evaluation for the life characteristics where the inclusions exist on the raceway surface and near the surface thereof as within Z₀.

### (Example 22)

Then, using a self-aligning roller bearing (bearing designation 22211), the relationship between the angle θ at which the fiber flow of the inner ring is in contact with the roller, the square root length and the life of the non-metallic inclusion existing on the raceway surface was evaluated. For the evaluation of the non-metallic inclusions, inspection was conducted like in Example 21 by the supersonic flaw inspection apparatus shown in Fig. 3.

Self-aligning roller bearing used was manufactured as described below. A blank-shaped ring was cut out from the steel material as the raw material while variously changing the angle α between the axial line of the inner ring and the axial line of the raw material (cylindrical material) such that the angle θ of the fiber flow relative to the raceway surface forms an optional angle (refer to Fig. 8). Then, the inner ring with θ = 0 - 90° was manufactured in the same steps as in Example 21 to manufacture the self-aligning roller bearings No. 10 to No. 18 shown in Table 5.

Also the raw material for the inner ring in this case was prepared by melting the steel material of poor cleanliness and using the same intentionally with a view point of the frequency for the occurrence of the non-metallic inclusions like in Example 21. Further, the outer ring and the roller were also manufactured by a usual method using usual commercial materials of excellent cleanliness like in Example 21 and in which the angle of the fiber flow of the material to the rolling surface was made in parallel with the axial direction of the bearing.

Test conditions for the supersonic flaw inspection were as described below.
Probe: Focus type probe and flat type probed (diameter of transducer: 6.5 mm)
Frequency: 5 MHz to 10 MHz
Incident angle: 19° and 27° (refraction angle : 45°, 90°)

Prior to the selection of the self-aligning roller bearings of No. 10 to No. 18 used in this example, several defective bearings were detected by preliminary flaw inspection. Then, after previously investigating the correlationship between the information for the detection range (size) and the beam path (time axis for supersonic wavelength) of the supersonic wave reflection echo in the defective portion and the size and the depth of actual defects (non-metallic inclusions) detected by cutting and inspecting the defective portions, it was served for the selection of the self-aligning roller bearings having non-metallic inclusions of this example (estimation for size and depth). Further, flaw inspection was conducted while changing the incident direction of the supersonic waves so as to be always in perpendicular to the fiber flow.

Then, bearing life test was conducted by using the same rotational tester in Example 21.

Test conditions are shown below.
Bearing: self-aligning roller bearing (bearing designation 22211)
Test load: radial load 35000N, and axial load 7000N
Bearing rotational frequency: 1500 min⁻¹
Lubricant: mineral oil corresponding to VG68

For each of the bearings having different angle θ for fiber flow, bearing inner rings with the square root length of the non-metallic inclusion within the range of 0.1 to 0.3 mm and the depth within the maximum shearing stress position (Z₀) in each of the case (No. 10 to No. 17) were selected each by the number of ten in the ultrasonic flaw inspecting test (ultrasonic testing). Then, L10 life based on the weibull function distribution was inspected on every bearings. Then, L10 life of bearings having various angles θ of the fiber flow was evaluated as the life ratio assuming the L10 as 1 (No. 10) life in a case where the angle θ of the fiber flow of the inner ring in contact with the roller (hereinafter referred to as the angle θ of the fiber flow) is 0° (right angle).

Table 5 and Fig. 11 show the result of the life test.

**Table 4**

| No. | Fiber flow angle θ (°) | Life ratio | Non-metallic inclusion |
|---|---|---|---|
| 10 | 0 | 1.00 | length 0.1 to 0.3 mm, depth within Z₀ |
| 11 | 5 | 0.98 | |
| 12 | 10 | 0.96 | |
| 13 | 15 | 0.88 | |
| 14 | 20 | 0.70 | |
| 15 | 30 | 0.65 | |
| 16 | 45 | 0.65 | |
| 17 | 90 | 0.57 | |
| 18 | 45 | 0.98 | Exceeding Z₀ |

As apparent from Table 5 and Fig. 11, it can be seen that there is no remarkable difference for the life ratio when the angle θ of the fiber flow is 15° or less (No. 10 to No. 13). Further, in the case where the angle θ of the fiber flow is 10° or less, it was found that the life difference with respect to the case of θ = 0° is 5% or less. Accordingly, it is preferred that the angle θ of the fiber flow is 10° or less.

On the other hand, in a case where the angle θ of the fiber flow exceeds 15° and reaches 20° or more, the difference of life with respect to the case of θ = 0° is 30% or more showing that the life tends to be shortened. Further, also in a case where the angle θ of the fiber flow is 45°, it can be seen that the life ratio is 0.98 giving no substantial effect in a case where the existent depth of the non-metallic inclusion exceeds Z₀.

From the results described above, it can be seen in a self-aligning roller bearing that long life bearings can be obtained with a bearing in which the angle of the fiber flow of the at least of one of the bearing rings of the inner and the outer rings in contact with the roller is 15° or less and which is assured that the square root length of a non-metallic inclusion existing in the volume of entire raceway circumferential surface × maximum shearing stress depth is 0.3 mm or less.

### Industrial applicability

As described above, the rolling bearing according to the present invention is a highly reliably rolling bearing with no occurrence of short life products and having stably assured long life.

Further, the roller bearing according to the present invention is excellent in the rolling fatigue life even under the environment where a slip is liable to occur between the rollers and the inner or outer rings, foreign matters does not enter and lubricating condition is favorable.

## Claims

1. A rolling bearing comprising an inner ring, an outer ring and a plurality of rolling elements disposed rotationably between the inner ring and the outer ring, wherein
at least one of the inner ring and the outer ring is assured by a non-destructive inspection that the maximum length of a non-metallic inclusion existing in the area between a raceway surface and a depth twice a depth at which the maximum shearing stress exerts is 0.5 mm or less.

2. A rolling bearing according to claim 1, wherein the maximum square root length of the non-metallic inclusion is assured to be 0.2 mm or less by the non-destructive inspection.

3. A roller bearing in which plural rollers are arranged in the circumferential direction between an inner ring and an outer ring, wherein
at least one of the bearing rings of the inner ring and the outer ring has the contact angle θ of the fiber flow with the roller is 15° or less, and it is assured by the non-destructive inspection that the square root length of the defect existing in the volume of a specimen is 0.3 mm or less where the entire raceway circumferential surface x maximum shearing stress depth = volume of the specimen.
